# NEW EUROPEAN PATENT SPECIFICATION

(11) **EP 1 615 383 B2**
(45) Date of publication and mention of the opposition decision: **27.06.2012**
(45) Mention of the grant of the patent: 24.10.2007
(21) Application number: 04727213.3
(22) Date of filing: 14.04.2004
(51) Int. Cl.: H04L 12/28, H04L 12/24

(54) **A DIGITAL SUBSCRIBER LOOP TERMINAL DEVICES MANAGEMENT SYSTEM**
DIGITALES TEILEHMERANSCHLUSSENDGERÄTEVERWALTUNGSSYSTEM
SYSTEME DE GESTION DE DISPOSITIFS TERMINAUX DE LIGNE D'ABONNE NUMERIQUE

(30) Priority: 14.04.2003 CN 03121827; 24.06.2003 CN 03149500
(43) Date of publication of application: 11.01.2006
(73) Proprietor: Huawei Technologies Co., Ltd., Shenzhen, Guangdong Province 518129 (CN)
(72) Inventor: LI, Jie Huawei Administration Building, Shenzhen Guangdong 518129 (CN); ZHANG, Hongyuan Huawei Administration Building, Shenzhen Guangdong 518129 (CN); XIE, Qiang Huawei Administration Building, Shenzhen Guangdong 518129 (CN); XIONG, Yupeng Huawei Administration Building, Shenzhen Guangdong 518129 (CN)
(74) Representative: Körber, Martin Hans
(86) International application number: PCT/CN2004/000353
(87) International publication number: WO 2004/091144

(56) References cited:
- EP-A- 1 079 658
- WO-A-01/26293
- WO-A-02/080515
- CN-A- 1 285 672
- US-A- 5 889 470
- US-A- 5 889 470
- US-A1- 2003 063 659

## Description

### Field of the Technology

The present invention relates to communication technique field, more particularly to a Digital Subscriber Loop (DSL) terminal equipment management system.

### Background of the Invention

With the development of telecom network, more and more users are enjoying the working and living convenience brought by broadband. Among the various broadband access techniques, DSL technique utilizes the existing twisted pair line resource as transmission medium, and has developed a plurality of access techniques, such as Asymmetrical Digital Subscriber Loop (ADSL), Single-line High-speed Digital Subscriber Loop (SHDSL), Very-high-bit-rate Digital Subscriber Loop (VDSL), etc, and these techniques are called by a joint name xDSL, which are applicable for different subscriber demands, widely applied all over the world, and have brought in favorable economic performance and society performance.

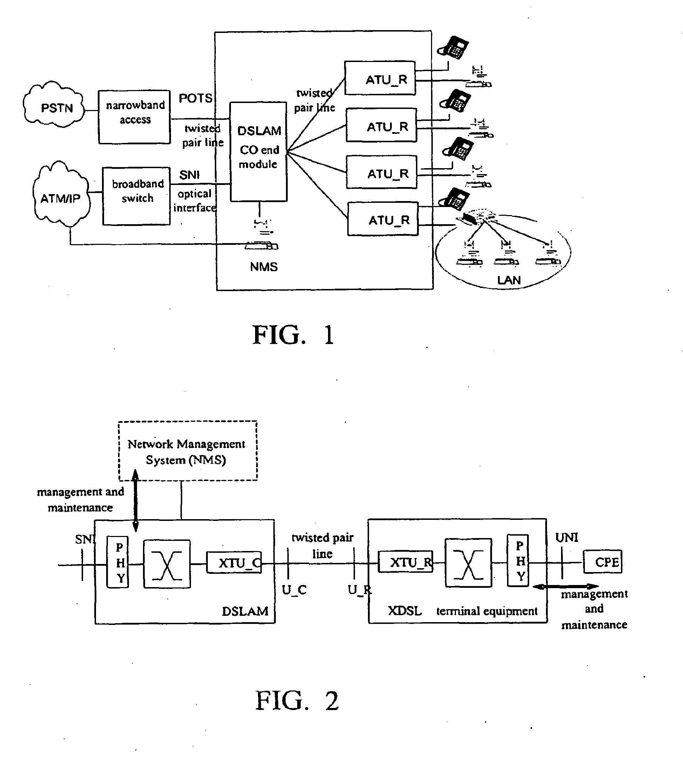

Taking ADSL access technique for example, the network application model thereof is shown in figure 1. At CO side, Digital Subscriber Loop Access Multiple (DSLAM) provides twisted pair line interface; terminal equipment ADSL Accept Transmit Unit at remote side (ATU_R) is set on subscriber side, this ATU_R is connected with DSLAM equipment through twisted pair line, ATU_R and DSLAM cooperate to implement broadband access function. Concretely speaking, ATU_R provides telephone terminal interface and data terminal interface for the subscriber at the same time, DSLAM equipment is accessed to broadband network through Service Network Interface (SNI), and accesses the subscriber phone analog voice signal transmitted from ATU_ R to Public Switching Telephone Network (PSTN) by adopting band-separation technique.

Because of differences in modulation technique, frequency band division and so on, other xDSL access systems are slightly different in network application, for instance, as to VDSL access, transmission length between DSLAM equipment and VTU_R at subscriber side is relatively small, while since SHDSL adopts base band transmission, SHDSL cannot share the line with narrowband analog voice, however, broadband access application modes of all xDSL access systems are almost the same.

At present, DSLAM equipment in the network is managed and maintained by Network Management System (NMS); as a segment of broadband access solving program, xDSL terminal equipment at subscriber side also needs managing and maintaining its working state by the network service provider. As xDSL terminal equipment is of large amount and widely distributed, in order to operate the broadband network effectively, reduce management and maintenance cost, and provide better service for broadband network subscribers, management and maintenance scheme of xDSL terminal equipment is demanded.

At present the most important xDSL access system management and maintenance mode is shown in figure 2. In the network model in figure 2, the DSLAM equipment is managed and maintained by NMS. NMS is constructed by network service providers uniformly according to network planning and manages DSLAM equipments inside the network uniformly. Simple Network Management Protocol (SNMP) is usually run between NMS and DSLAM. For xDSL terminal equipment in the network, because xDSL terminal equipment is at subscriber side, generally speaking, it can only collect and report general physical line parameter information of xDSL terminal equipment at CO side, while it cannot manage and maintain xDSL terminal equipment. Therefore, management and maintenance function of xDSL terminal equipment can only be performed locally. Concretely speaking, xDS1 terminal equipment provides a local management and maintenance interface, and xDSL terminal equipment can be managed and maintained through this management and maintenance interface.

However, the above-mentioned scheme is of the following disadvantages:
1) Centralized management and maintenance of xDSL terminal equipments cannot be implemented. In the above-mentioned scheme, NMS can only manage and maintain DSLAM equipment, and management and maintenance of xDSL terminal equipment must be performed at subscriber side, unable to implement effective management and maintenance of broadband network through NMS.
2) Network operation and maintenance cost is high. Management and maintenance of xDSL terminal equipment must be performed at subscriber side, in this way, many problems occurred to xDSL terminal equipment including update problem must be solved by visiting maintenance, as those problems also include self-malfunction of xDSL terminal equipment or subscriber's mishandling to xDSL terminal equipment, and so on, so, all above occurred problems must be solved by visiting maintenance, which will definitely lead to high maintenance cost.
3) Unfavorable to compatibility of network equipment. When xDSL terminal equipment is delivered to the subscriber for use, there must be default setting, so as to realize service interaction with network equipment. For instance, when provided to the subscriber, ADSL terminal equipment must be configured with Asynchronous Transform Mode Permanent Virtual Connection (ATM PVC), and connection identifier Virtual Path Identifier/Virtual Channel Identifier (VPI/VCI) of PVC must be the same as configuration of corresponding port in the DSLAM. While in effect, the default VPI/VCI configuration of PVC port in DSLAM equipment produced by different producers are different, which demands to modify configuration parameters of xDSL terminal equipment so as to suit different DSLAM equipments.
4) Unable to implement configuration exemption or automatic configuration of xDSL terminal equipment. When xDSL terminal equipment is ex factory or delivered to the subscriber, ATM PVC connection must be configured in advance for service need, if ex-factory configuration of xDSL terminal equipment is unsuitable for service, the configurations must be manually modified one by one, unable to implement automatic configuration of xDSL terminal, so that the service provider must provide maintenance measure to help broadband subscribers open a account, which is disadvantageous to large-scale network operation, and subscriber's mishandling to xDSL terminal equipment will also affect subscriber's utilization.

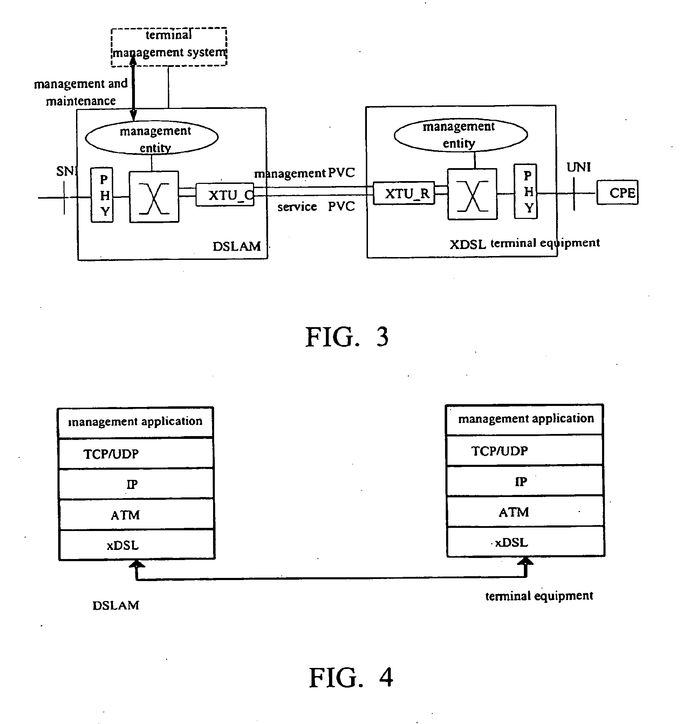

To solve the problem in the above-mentioned scheme, that is it's unable to implement centralized and unified management of xDSL terminal equipment, terminal management technique shown in figure 3 is put forward accordingly. Among so many xDSL, access techniques, ADSL access technique is the most widely applied one at the present time, taking ADSL access technique for example, which is created and developed on the basis of ATM technique, between Accept Transmit Unit at CO side (ATU_C) of ADSL and ATU_R, subscriber data is carried through ATM PVC, namely service PVC shown in figure 3, therefore, it is easily conceived to establish one more PVC to manage ADSL terminal equipment, this PVC is right the management PVC shown in figure 3. This management mode is also applicable for SHDSL access mode that is also based on ATM mode.

Concretely speaking, as shown in figure 3, in DSLAM equipment or xTU_C of this equipment, ATM/IP transition protocol like 1483B or IPoA (IP over ATM) is adopted to terminally manage PVC, and protocol entity based on Transfer Control Protocol/Internet Protocol (TCP/IP) protocol stack is run. Or AAL5 can be adopted to terminally manage PVC, in this way, management entity can capsulate management protocol on PVC without being based on TCP/IP protocol stack. In addition, at least two ATM PVC connections should be configured for xDSL terminal equipment, one for carrying subscriber's data service, and the other one for carrying management information, meanwhile, a management entity must be run, so that xDSL terminal equipment can communicate with management entity in DSLAM equipment through this management entity thereof according to committed management protocol like HTTP, telnet or SNMP, thus management function is implemented. In general condition, if the committed communication protocol is based on TCP/IP, corresponding IP address is to be configured in management entity, in order to differentiate different management entities. As to DSLAM equipment, no matter which terminal manner is adopted, the management entity thereof communicates with xDSL terminal equipment through management PVC, so that management information channel is established, under the control of terminal management system, each management function to xDSL terminal equipment is implemented, such as data configuration, software update, statistic maintenance and diagnosis testing.

Compared with the prior technique, the most significant improvement of this technique is to implement centralized and unified management of xDSL terminal equipment, so that service providers don't have to rush about maintaining xDSL terminal equipment among different subscribers. However, this technique is of the following distinct disadvantages:
1) The compatibility problem still exits. In the present technical scheme, there must be at least two ATM PVC connections on both xDSL terminal equipment and DSLAM equipment, one is service PVC and the other is management PVC, therefore, when xDSL terminal equipment is ex factory or delivered to the subscriber, it must be guaranteed that management PVC is configured completely, and configuration parameters thereof are completely the same as that of corresponding interface of DSLAM equipment. While management PVC configurations of different service providers may be totally different, it is quite difficult to guarantee configuration consistency of management PVC.
2) Leading to equipment complexity and cost arise.
   In the present scheme, it is only implemented to establish a connection channel between DSLAM equipment and xDSL terminal equipment by establishing management PVC connection, in order to implement management and maintenance of xDSL terminal equipment, carrier protocol on PVC channel is to be established. At present the most popular carrier protocol is TCP/IP protocol, which demands management entity of xDSL terminal equipment to support TCP/IP protocol stack. In another word, it is demanded to implement TCP/IP protocol stack shown in figure 4 on management entity of xDSL terminal equipment, therefore, an IP address must be allocated for this management entity. While in practical application, xDSL terminal equipment usually adopts transparent bridging mode, for which no IP address is required inside, therefore, if xdSL terminal equipment is configured so that this equipment can be managed through DSLAM equipment, it will certainly lead to more complexity of xDSL terminal equipment, further more, IP address planning and allocation problem of xDSL terminal equipment is to be considered, which will lead to more difficult management, accordingly to higher cost.
   Besides, since each DSLAM equipment can support more than 10,000 xDSL interfaces, in order to terminate management PVC of each xDSL terminal equipment, it is demanded to set corresponding hardware device in DSLAM equipment so as to terminate the large amount of management PVC, which leads to complexity of DSLAM equipment.
3) Unable to manage a plurality of xDSL terminal equipment at the same time. In the present scheme, as it is required to allocate an IP address for management entity of xDSL terminal equipment, to guarantee that this IP address is known by management entity of DSLAM equipment, the current applicable method is to configure default IP address uniformly when producing xDSL terminal equipment, but this will lead to the following problems: IP addresses of management entities in all xDSL terminal equipments are the same, therefore, when management entity is managed by visiting xDSL terminal equipment, the service provider can only adopt one-by-one manner, namely another xDSL terminal equipment can not be visited until the currently managed xDSL terminal equipment is disconnected, while multiple xDSL terminal equipment cannot be managed at the same time, and this is apparently quite inconvenient for the service provider.
4) Unable to manage VDSL terminal equipment. Connection management channel based on PVC is applicable for xDSL access technique based on ATM, such as ADSL and SHDSL, when there is no ATM connection, this management scheme is not applicable any more, and other management channels must be established; as to VDSL which is based on Ethernet, it is demanded to establish other management channels. In another word, management schemes of different xDSL techniques are not unified, thus on DSLAM equipment, different management entities must be run for different xDSL, access modes, which increases equipment complexity at CO side.
5) Still unable to implement configuration exemption of xDSL terminal equipment. It can be seen from the above-described technical scheme that, before using xDSL terminal equipment, it is still demanded to perform initial configuration, which at least comprises configuration of management channel and corresponding IP protocol, therefore, complexity of account-opening operation is increased.

U.S. Patent Application US2003/0063659 discloses a signal processing unit in a DSL modem comprising at least one transmit and one receive digital filter that are adjustable through modem control means, input means for receiving data from a modem chip, output means for transmitting data to the modem chip, and means for providing control parameters to at least one transmit and one receive digital filter from the modem control means.

US Patent No. 5,889,470 discloses a DSL access device management information base (MIB) that allows the remote management of a DSL access device by using a constructed enterprise DSL MIB to define a plurality of objects that define the operation of a DSL access device.

### Summary of the Invention

Whereas the above description, the main object of the present invention is to provide a Digital Subscriber Loop (DSL) terminal equipment management system, so that without configuring xDSL terminal equipment in advance at all, when xDSL line is activated, terminal equipment management system can uniformly configure, test and monitor xDSL terminals through DSLAM equipment.

To obtain the above object, technical scheme of the present invention is according to claim 1. Advantageous embodiments are defined in claims 2 to 7.

Scheme of the present invention is of the following advantages:
1) Configuration exemption of xDSL terminal equipment is implemented. According to configuration of the present invention's scheme, if only xDSL lines are synchronous, it can be implement to manage xDSL terminal equipment, without any default configuration to xDSL terminal equipment, thus xDSL terminal equipment is of stronger compatibility and adaptability.
2) Centralized management of xDSL terminal equipment is implemented. According to configuration of the present invention's scheme, management and maintenance of whole network xDSL terminal equipments can be implemented at terminal equipment management center, without going to the local site for xDSL terminal equipment maintenance, thus network operation and maintenance cost is greatly reduced.
3) Simultaneous management and maintenance of whole network xDSL terminal equipments is implemented. According to configuration of the present invention's scheme, it is not needed to set IP address in xDSL terminal equipment, which avoids address resource waste caused by IP address allocation and default configuration, as well as avoids the problem of unable to visit a plurality of xDSL terminal equipments.
4) Management function is easy to extend. In this scheme of the present invention, Proxy function is realized on DSLAM equipment so as to transparently transmit specific high-hierarchy management information, therefore, with the development of technology, when it is required to provide new subscriber interfaces or new service functions on xDSL terminal equipment, it is just needed to modify and update the unified terminal equipment management system, which avoids modifying and updating DSLAM equipments in the whole network.
5) Management cost of xDSL terminal equipment is reduced. As the management channel provided by the present invention is completely supported by xDSL chip itself, CO side doesn't need to configure extra hardware equipment for terminal management to terminate management channel, in this way, management cost is greatly reduced.
6) In scheme of the present invention, xDSL terminal equipment is identified by identifier of DSLAM equipment, so that it is very convenient to position xDSL terminal equipment; besides, terminal equipment management unit can manage xDSL terminal equipment without having to configure such special address as IP address for xDSL terminal equipment, therefore, there will not be large amount of IP addresses being occupied.

### Brief Description of the Drawings

Figure 1 is a application model of ADSL broadband access network in the existing technology;
Figure 2 is a solving scheme illustrating xDSL terminal equipment management in the existing technology 1;
Figure 3 is a solving scheme illustrating xDSL terminal equipment management in the existing technology 2;
Figure 4 is a schematic diagram illustrating protocol stack concerning the present technology 2;

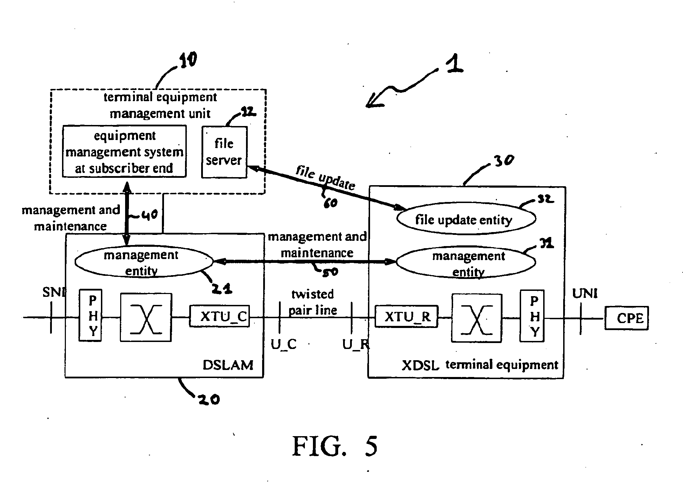

Figure 5 is a schematic diagram illustrating reference module of xDSL terminal equipment management in scheme of the present invention;
Figure 6 is a schematic diagram illustrating protocol stack reference module of ADSL terminal equipment management in scheme of the present invention;
Figure 7 is another schematic diagram illustrating protocol stack reference module of ADSL terminal equipment management in scheme of the present invention;
Figure 8 is a schematic diagram illustrating SNMP message and HDLC interface frame structure in embodiment of the present invention.

### Embodiments of the Invention

Now, the present invention will be described in detail hereinafter with reference to the accompanying drawings and a specific embodiment.

In the related xDSL terminal equipment management system of the present invention, a terminal equipment management unit 10 for managing xDSL terminal equipment, DSLAM equipment 20 and xDSL terminal equipment 30 at subscriber side are comprised at least. Terminal equipment management unit 10 realizes correlation process between subscriber interface and network component; DSLAM equipment 20 realizes management message transfer and transparent transmission between terminal equipment management unit 10 and xDSL terminal equipment 30; xDSL terminal equipment 30 realizes management protocol and access control. Wherein, DSLAM equipment 20 and xDSL terminal equipment 30 bear a management entity 21, 31 respectively. Both terminal equipment management unit 10 and the management entities 21, 31 bear Management Information Base (MIB), and each management function is implemented through these MIB.

In scheme of the present invention, the following management interfaces are to be added in the above-mentioned equipment:
1) Management interface 40 between terminal equipment management unit 10 and DSLAM equipment 20. This interface 40 is located between terminal equipment management unit 10 and management entity 21 in DSLAM equipment 20, and indirect management of xDSL terminal equipment 30 can be implemented through this interface 40.
2) Management interface 50 between xDSL terminal equipment 30 and DSLAM equipment 20. This interface 50 is located between management entity 21 in DSLAM equipment 20 and management entity 31 of xDSL terminal equipment 30, and management information of xDSL terminal equipment 30 can be transmitted through this interface 50.
3) File transmission interface 60 between file server 12 and xDSL terminal equipment 30. Concretely speaking, in order to realize such operations as file download and software update of xDSL terminal equipment 30, file server 12 is to be set in terminal equipment management unit 10, file update entity 32 is to be set in xDSL terminal equipment 30, a file transmission interface 60 is to be set between the file server 12 and file update entity 32 thereof, so that files can be transmitted through this interface 60, this interface 60 also cooperates with terminal equipment management unit 10 to fulfill operations like file download and software update of xDSL terminal equipment 30 at subscriber side. Besides, the file transmission channel between file server 12 and file update entity 32 is a transmission channel adopting standard file transmission protocol, and this transmission channel can be established through SNMP management message control.

By means of the above setting, DSLAM equipment 20 can be connected to both terminal equipment management unit 10 and xDSL terminal equipment 30 through communication interface. What's more, as to the management information related to xDSL terminal equipment 30, DSLAN equipment just performs transparent processing and bottom hierarchy communication protocol transfer, not performing management protocol analysis processing. Terminal equipment management unit 10 can access xDSL terminal equipment 30 through DSLAM equipment 20, and can implement centralized management and maintenance of all xDSL terminal equipment 30. In this way, if interface and function of xDSL terminal equipment 30 are changed so that management information needs extending or updating, just accordingly modifying and updating terminal equipment management unit 10 can support new management function, not need to modify DSLAM equipment 20.

When the above xDSL terminal equipment 30 is accessed to DSLAM equipment 20, physical position information of this DSLAM equipment 20 can be used to identify this terminal equipment, and terminal equipment management unit 10 can locate this xDSL terminal equipment 30 through this physical position information, as well as manage and control this terminal equipment. The identifier information set for xDSL terminal equipment 30 is actually physical position information of digital subscriber line interface, which is connected to xDSL terminal equipment 30 through DSLAM equipment 20; DSLAM equipment 20 is of various kinds of structures, if DSLAM equipment 20 is single-rack and single-frame, physical position information of the interface thereof comprises a triple composed of CO side equipment identifier, single-board slot identifier and interface identifier; if DSLAM equipment 20 is single-rack and multi-frame, physical position information of the interface thereof comprises a quadruple composed of CO side equipment identifier, frame identifier, single-board slot identifier and interface identifier; if DSLAM equipment 20 is multi-rack and multi-frame, physical position information of the interface thereof comprises a quintuple composed of CO side equipment identifier, rack identifier, frame identifier, single-board slot identifier and interface identifier, correspondingly, identifier information of xDSL terminal equipment 30 is of the above cases.

In addition, xDSL terminal equipment 30 identifier can be identified by a function, for instance, this function = F (rack identifier, frame identifier, single-board slot identifier, interface identifier), then this function can be a coding rule. The rack identifier, frame identifier, single-board slot identifier and interface identifier thereof can be represented by a 32-bit integer.

In scheme of the present invention, when terminal equipment management unit 10 manages xDSL terminal equipment 30 through DSLAM equipment 20, SNMP protocol can be adopted just as equipment operation and management manner of general networks. NMS is used for managing DSLAM equipment 20, which is usually formed as a high-performance working station, and NSM communicates with DSLAM equipment 20 through SNMP protocol, therefore, the terminal equipment management unit 10 in scheme of the present invention can be either integrated in NMS or be an independent management system.

Besides, the management entity 21, 31 mentioned in the present embodiment is a function module run on the equipment, as to DSLAM equipment 20 and xDSL terminal equipment 30 is concerned, the management entity 21, 31 mentioned hereby is SNMP Proxy module run on DSLAM equipment 20 as well as SNMP Agent module run on xDSL terminal equipment 30. Action of these two modules is to transfer the SNMP message sent by terminal equipment management unit 10 to xDSL terminal equipment 30, execute relevant commands according to this SNMP message, and perform corresponding management and maintenance operation.

Taking for example of managing ADSL terminal equipment through SNMP protocol in ADSL access system, scheme of the present invention will be described in detail hereinafter.

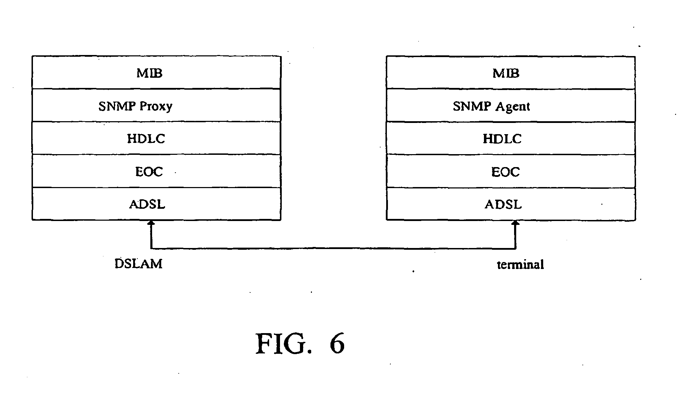

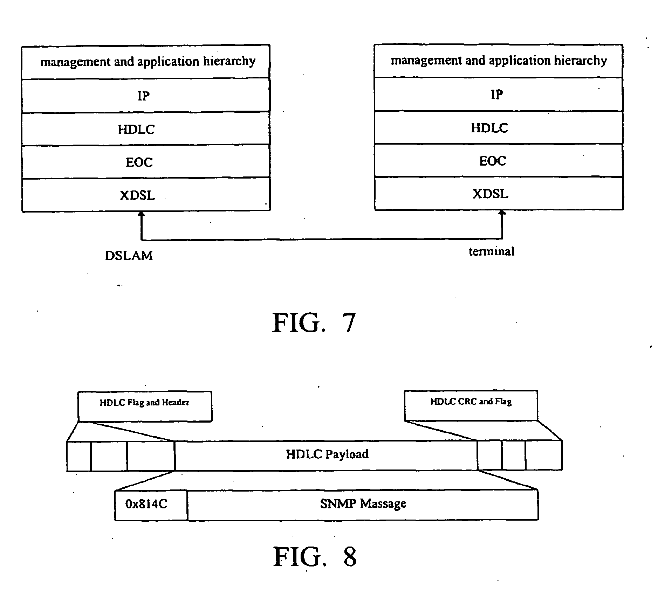

Figure 6 illustrates a protocol module for implementing ADSL access system management through SNMP protocol in embodiment of the present invention. When SNMP manner is adopted to perform xDSL terminal equipment management, SNMP messages are carried on ADSL Embedded Operation Channel (EOC), High-hierarchy Data Link Control (HDLC) frame carrier is adopted as link hierarchy control protocol, in this way, if only xDSL lines are synchronous, management information interaction between CO side and xDSL terminal equipment 30 can be implemented, thereby preventing the demand of default configuration data, IP address and protocol for xDSL terminal equipment 30, obtaining the object of configuration exemption maintenance. Wherein, interface definition between HDLC and EOC accords with ITU-T G.997.1 standard. Figure 8 illustrates the frame structure of SNMP message and HDLC interface.

Concretely speaking, when needing to manage xDSL terminal equipment 30, terminal equipment management unit 10 will send SNMP message to DSLAM equipment 20 through the management interface between terminal equipment management unit 10 and DSLAM equipment 20, and then DSLAM equipment 20 judges whether the received message is management message of xDSL terminal equipment 30, if yes, the management entity 31 thereof, namely SNMP Proxy module, will forward the SNMP message to xDSL terminal equipment 30 through EOC channel and HDLC frame. Management entity 31 of xDSL terminal equipment 30, namely SNMP Agent module, receives SNMP message through EOC channel and HDLC frame, and performs according to SNMP message. If there is SNMP message in xDSL terminal equipment 30 to be reported to terminal equipment management unit 10, reverse technological process will be adopted. As an application hierarchy protocol, SNMP protocol is directly carried in HDLC frame, so there is no TCP/IP protocol hierarchy, and there is no need of configuration like IP address allocation.

As to xDSL system, management of xDSL terminal equipment 30 can be based on other high-hierarchy protocols such as IP protocol, and management information is also carried by EOC of these systems, thus realizing management application. However, IP protocol is adopted, therefore, it is demanded that there be default IP address configuration in xDSL terminal equipment 30, and this IP address must guarantee interaction between xDSL terminal equipment 30 and terminal equipment management unit 10. Protocol reference model in this situation is shown in figure 7.

In addition, configuration information of all terminals should be stored in terminal equipment management unit 10, and the configuration information thereof can be automatically granted to xDSL terminal equipment 30 when demanded. After completing configuring xDSL terminal equipment 30, terminal equipment management unit 10 needs to send a command to xDSL terminal equipment 30, and demands xDSL terminal equipment 30 to store this configuration information in internal non-volatile memory as configuration data for next startup of terminal equipment.

The above description is just a preferred embodiment thereof, not necessarily used to define the protection scope of the present invention.

## Claims

1. A Digital Subscriber Loop (DSL) terminal equipment management system (1), comprising a terminal equipment management unit (10), a Digital Subscriber Loop Access Multiple, DSLAM, equipment (20) and a Digital Subscriber Loop xDSL terminal equipment (30),
the said terminal equipment management unit (10) adopting a communication protocol, and performing data communication with the xDSL terminal equipment (30) through the DSLAM equipment (20);
the DSLAM equipment (20) transferring and transparently transmitting the received data;
**characterized in that**:
the DSLAM equipment (20) and the Digital Subscriber Loop xDSL terminal equipment (30) respectively bear a management entity (21, 31), and the terminal equipment management unit (10) as well as the management entities (21, 31) respectively bear a Management Information Base, MIB, for implementing management functionality;
the terminal equipment management unit (10) and the management entity (21) of the DSLAM equipment (20) as well as the management entity (21) of DSLAM equipment (20) and the management entity (31) of the xDSL terminal equipment (30) at subscriber side are connected through respective management interfaces (40, 50);
the xDSL terminal equipment (30) is identifiable by physical position information of a digital subscriber line interface, which connects to the xDSL terminal equipment (30) through the DSLAM equipment (20);
wherein the data transmission between said terminal equipment management unit (10) and said xDSL terminal equipment (30) through the DSLAM equipment (20) is: data transmission being performed according to identifier information of said xDSL terminal equipment (30); said identifier information of said xDSL terminal equipment (30) being said physical position information of said digital subscriber line interface, which is connected with this xDSL terminal equipment (30), on said DSLAM equipment (20).

2. The system according to claim 1, wherein Simple Network Management Protocol, SNMP, is run on the terminal equipment management unit (10), SNMP Proxy is run in the DSLAM equipment (20), and SNMP Agent is run in the xDSL terminal equipment (30); SNMP protocol being adopted to transmit SNMP management messages between the said terminal equipment management unit (10) and the xDSL terminal equipment (30).

3. The system according to claim 2, wherein the adopted channel between the said terminal equipment management unit (10) and the xDSL terminal equipment (30) for transmitting SNMP messages is an Embedded Operation Channel, EOC, and the adopted link hierarchy control protocol is High-hierarchy Data Link Control, HDLC.

4. The system according to claim 3, wherein the interface between the said EOC and HDLC is an interface of ITU-T G.997.1 standard.

5. The system according to claim 3, wherein the SNMP messages transmitted to xDSL, terminal equipment (30) by terminal equipment management unit (10) are configuration and command information; the said xDSL terminal equipment (30) storing the configuration and command information transmitted by terminal equipment management unit (10), and taking this information as configuration data for next startup.

6. The system according to claim 1, wherein the DSLAM equipment (20) bears a Network Management System, NMS, for managing DSLAM equipment, and the said terminal equipment management unit (10) is integrated in the said NMS or being an independent system.

7. The system according to claim 1, wherein the said digital subscriber loop is Asymmetrical Digital Subscriber Loop, ADSL, Very-high-bit-rate Digital Subscriber Loop, VDSL or Single-line High-speed Digital Subscriber Loop, SHDSL.

## Patentansprüche

1. Digitales Teilnehmeranschluss-(DSL-)Endgerätemanagement- bzw. -verwaltungssystem (1), welches Folgendes aufweist: eine Endgerätemanagementeinheit (10), ein digitales Vielfachzugriff-Teilnehmeranschluss-, DSLAM-, Gerät (20) und ein digitales Teilnehmeranschluss-xDSL-Endgerät (30),
wobei die Endgerätemanagementeinheit (10) ein Kommunikationsprotokoll annimmt und mit dem xDSL-Endgerät (30) über das DSLAM-Gerät (20) Datenkommunikation durchführt;
wobei das DSLAM-Gerät (20) die empfangenen Daten überträgt und transparent sendet;
**dadurch gekennzeichnet, dass**:
das DSLAM-Gerät (20) und das digitale Teilnehmeranschluss-xDSL-Endgerät (30) jeweils eine Managemententität (21, 31) aufweisen und dass die Endgerätemanagementeinheit (10) ebenso wie die Managemententitäten (21, 31) jeweils eine Managementinformationsbasis, MIB, aufweisen, um eine Managementfunktionalität zu implementieren;
die Endgerätemanagementeinheit (10) und die Managemententität (21) des DSLAM-Gerätes (20) ebenso wie die Managemententität (21) des DSLAM-Geräts (20) und die Managemententität (31) des xDSL-Endgerätes (30) auf der Teilnehmerseite jeweils über Managementschnittstellen (40, 50) verbunden sind;
das xDSL-Endgerät (30) durch physikalische Positionsinformationen einer digitalen Teilnehmerleitungsschnittstelle identifizierbar ist, welche das xDSL-Endgerät (30) über das DSLAM-Gerät (20) verbinden,
wobei die Datenübertragung zwischen der Endgerätemanagementeinheit (10) und dem xDSL-Endgerät (30) durch das DSLAM-Gerät (20) Folgendes ist: eine Datenübertragung, welche entsprechend Kennungsinformationen des xDSL-Endgeräts (30) durchgeführt wird; die Kennungsinformationen des xDSL-Endgeräts (30) die physikalische Positionsinformationen der digitalen Teilnehmerleitungsschnittstelle, welche mit diesem xDSL-Endgerät (30) verbunden ist, auf dem DSLAM-Gerät (20) sind.

2. System nach Anspruch 1, in welchem das Simple Network Management Protocol bzw. das einfache Netzwerk-Managementprotokoll SNMP auf der Endgerätemanagementeinheit (10) laufen gelassen wird, das SNMP-Proxy in dem DSLAM-Gerät (20) laufen gelassen wird und das SNMP-Agent in dem xDSL-Endgerät (30) laufen gelassen wird; wobei das SNMP-Protokoll dafür ausgelegt ist, SNMP-Managementnachrichten zwischen der Endgerätemanagementeinheit (10) und dem xDSL-Endgerät (30) zu senden.

3. System nach Anspruch 2, in welchem der angenommene Kanal zwischen der Endgerätemanagementeinheit (10) und dem xDSL-Endgerät (30) zum Senden von SNMP-Nachrichten ein Embedded Operation Channel bzw. eingebetteter Betriebskanal, EOC, und das angenommene Verbindungshierarchie-Steuerprotokoll ein High-Hierarchy Data Link Control bzw. eine hochhierarchische Datenverbindungssteuerung, HDLC, ist.

4. System nach Anspruch 3, in welchem die Schnittstelle zwischen dem EOC und dem HDLC eine Schnittstelle des ITU-T G.977.1-Standard ist.

5. System nach Anspruch 3, in welchem die SNMP-Nachrichten, welche zu dem xDSL-Endgerät (30) durch die Endgerätemanagementeinheit (10) gesendet werden, die Konfigurations- und Befehlsinformationen sind; wobei das xDSL-Endgerät (30) die Konfigurations- und Befehlsinformationen, welche durch die Endgerätemanagementeinheit (10) gesendet werden, speichert und diese Informationen als Konfigurationsdaten für den nächsten Startvorgang hernimmt.

6. System nach Anspruch 1, in welchem das DSLAM-Gerät (20) ein Network Management System bzw. Netzmanagementsystem, NMS, trägt, um das DSLAM-Gerät zu managen bzw. zu verwalten, und die Endgerätemanagementeinheit (10) in dem NMS integriert ist oder ein unabhängiges System ist.

7. System nach Anspruch 1, in welchem der digitale Teilnehmeranschluss ein Asymmetrical Digital Subscriber Loop bzw. ein asymmetrischer digitaler Teilnehmeranschluss, ADSL, ein Very-High-Bit-Rate Digital Subscriber Loop bzw. ein digitaler Teilnehmeranschluss mit sehr hoher Bitrate, VDSL, oder ein Single-Line High-Speed Digital Subscriber Loop bzw. ein digitaler Einzelleitungs-Teilnehmeranschluss mit hoher Geschwindigkeit, SHDSL, ist.

## Revendications

1. Système de gestion d'équipements terminaux (1) de ligne d'abonné numérique (DSL, pour Digital Subscriber Loop), comprenant une unité de gestion d'équipements terminaux (10), un équipement multiplexeur d'accès DSL (DSLAM pour Digital Subscriber Loop Access Multiplexer) (20) et un équipement terminal de ligne d'abonné numérique xDSL (30),
ladite unité de gestion d'équipements terminaux (10) adoptant un protocole de communication, et effectuant une communication de données avec l'équipement terminal xDSL (30) par le biais de l'équipement DSLAM (20) ;
l'équipement DSLAM (20) transférant et transmettant de façon transparente les données reçues ;
**caractérisé en ce que**
l'équipement DSLAM (20) et l'équipement terminal de ligne d'abonne numérique xDSL (30) portent respectivement une entité de gestion (21, 31), et l'unité de gestion d'équipements terminaux (10) ainsi que les entités de gestion (21, 31) portent respectivement une base d'informations de gestion, (MIB pour Management Information Base) pour mettre en oeuvre une fonctionnalité de gestion ;
l'unité de gestion d'équipements terminaux (10) et l'entité de gestion (21) de l'équipement DSLAM (20) ainsi que l'entité de gestion (21) de l'équipement DSLAM (20) et l'entité de gestion (31) de l'équipement terminal xDSL (30) du côté abonné sont connectées par des interfaces de gestion (40, 50) respectives ;
l'équipement terminal xDSL (30) est identifiable par une information de position physique d'une interface de ligne d'abonné numérique, qui se connecte à l'équipement terminal xDSL (30) par le biais de l'équipement DSLAM (20) ;
dans lequel la transmission de données entre ladite unité de gestion d'équipements terminaux (10) et ledit équipement terminal xDSL (30) par le biais de l'équipement DSLAM (20) est : une transmission de données effectuée selon une information d'identifiant dudit équipement terminal xDSL (30) ; ladite information d'identifiant dudit équipement terminal xDSL (30) étant ladite information de position physique de ladite interface de ligne d'abonné numérique, connectée à cet équipement terminal xDSL (30), sur ledit équipement DSLAM (20).

2. Système selon la revendication 1, dans lequel le protocole de gestion de réseau simple (SNMP pour Simple Network Management Protocol) est mis en oeuvre sur l'unité de gestion d'équipements terminaux (10), un serveur mandataire SNMP est mis en oeuvre dans l'équipement DSLAM (20), et un agent SNMP est mis en oeuvre dans l'équipement terminal xDSL (30) ; le protocole SNMP étant adopté pour transmettre des messages de gestion SNMP entre ladite unité de gestion d'équipements terminaux (10) et l'équipement terminal xDSL (30).

3. Système selon la revendication 2, dans lequel le canal adopté, entre ladite unité de gestion d'équipements terminaux (10) et l'équipement terminal xDSL (30) pour transmettre des messages SNMP est un canal d'opération embarqué (EOC pour Embedded Operation Channel) et le protocole de contrôle de hiérarchie de liaison adopté est la procédure de commande de liaison de données à haut niveau, (HDLC pour High-level Data Link Control).

4. Système selon la revendication 3, dans lequel l'interface entre ledit EOC et le HDLC est une interface de standard ITU-T G.997.1.

5. Système selon la revendication 3, dans lequel les messages SNMP, transmis à l'équipement terminal xDSL (30) par l'unité de gestion d'équipements terminaux (10), sont des informations de configuration et d'instruction ; ledit équipement terminal xDSL (30) stockant les informations de configuration et d'instruction, transmises par l'unité de gestion d'équipements terminaux (10), et prenant ces informations en tant que données de configuration pour le démarrage suivant.

6. Système selon la revendication 1, dans lequel l'équipement DSLAM (20) porte un système de gestion de réseau (NMS pour Network Management System), pour gérer l'équipement DSLAM, et ladite unité de gestion d'équipements terminaux (10) est intégrée dans ledit NMS ou est un système indépendant.

7. Système selon la revendication 1, dans lequel ladite ligne d'abonné numérique est une ligne d'abonné numérique asymétrique, ADSL (Asymmetrical Digital Subscriber Loop), une ligne d'abonné numérique à très haut débit, VDSL (Very-high-bit-rate Digital Subscriber Loop), ou une ligne d'abonné numérique à haut débit symétrique, SHDSL (Single-line High-speed Digital Subscriber Loop).
